# EUROPÄISCHE PATENTANMELDUNG

(11) **EP 4 273 201 A2**
(43) Veröffentlichungstag der Anmeldung: **08.11.2023**
(21) Anmeldenummer: 23170240.8
(22) Anmeldetag: 27.04.2023
(51) Int. Cl.: C09J 5/06, C09J 7/10, C08K 5/22, C08K 3/04, C08K 9/10

(54) **THERMISCH AKTIVIERBARES EXPANSIONSELEMENT, VERWENDUNG DESSELBEN SOWIE FÜGETEIL UND VERBUNDBAUTEIL UMFASSEND DAS THERMISCH AKTIVIERBARE EXPANSIONSELEMENT**

(30) Priorität: 02.05.2022 DE 102022110643
(71) Anmelder: Fraunhofer-Gesellschaft zur Förderung der angewandten Forschung e.V., 80686 München (DE)
(72) Erfinder: Adam, Michael, 28359 Bremen (DE); Fricke, Holger, 28359 Bremen (DE)
(74) Vertreter: Eisenführ Speiser

(57) **Zusammenfassung**

Beschrieben wird ein thermisch aktivierbares Expansionselement zur Schwächung oder Lösung von Klebeverbindungen, umfassend eine Vielzahl von Treibmitteleinheiten, umfassend oder bestehend aus ein oder mehreren physikalischen und/oder chemischen Treibmitteln, umgeben von einer Matrix, umfassend oder bestehend aus ein oder mehreren Substanzen ausgewählt aus der Gruppe bestehend aus Polymeren, Oligomeren und monomeren Vorläuferverbindungen hiervon. Ferner beschrieben wird die Verwendung von ein oder mehreren erfindungsgemäßen thermisch aktivierbaren Expansionselementen und/oder thermisch aktivierbaren Formteilen in einer Klebeverbindung von miteinander verklebten Fügeteilen. Beschrieben wird auch ein Fügeteil mit ein oder mehreren erfindungsgemäßen thermisch aktivierbaren Expansionselementen und/oder ein oder mehreren erfindungsgemäß zu verwendenden thermisch aktivierbaren Formteilen auf der Oberfläche des Fügeteils sowie ein Verbundbauteil, umfassend ein oder mehrere, zwischen den miteinander verbundenen Fügeteilen angeordnete erfindungsgemäße thermisch aktivierbare Expansionselemente und/oder erfindungsgemäß zu verwendende thermisch aktivierbare Formteile. Beschreiben wird außerdem ein Verfahren zur Herstellung eines erfindungsgemäßen Verbundbauteils sowie ein Verfahren zur Schwächung bzw. Lösung der Klebeverbindung eines erfindungsgemäßen Verbundbauteils.

## Beschreibung

Die vorliegende Erfindung betrifft ein thermisch aktivierbares Expansionselement zur Schwächung oder Lösung von Klebeverbindungen. Die Erfindung betrifft ferner die Verwendung von ein oder mehreren erfindungsgemäßen thermisch aktivierbaren Expansionselementen und/oder thermisch aktivierbaren Formteilen in einer Klebeverbindung von miteinander verklebten Fügeteilen zur Schwächung oder zum Lösen der Klebeverbindung. Die Erfindung betrifft auch ein Fügeteil mit ein oder mehreren erfindungsgemäßen thermisch aktivierbaren Expansionselementen und/oder ein oder mehreren erfindungsgemäß zu verwendenden thermisch aktivierbaren Formteilen auf der Oberfläche des Fügeteils sowie ein Verbundbauteil, umfassend mindestens zwei durch einen (abgebundenen) Klebstoff miteinander verbundene Fügeteile und ein oder mehrere, zwischen den miteinander verbundenen Fügeteilen angeordnete erfindungsgemäße thermisch aktivierbare Expansionselemente und/oder erfindungsgemäß zu verwendende thermisch aktivierbare Formteile. Die Erfindung betrifft außerdem ein Verfahren zur Herstellung eines erfindungsgemäßen Verbundbauteils sowie ein Verfahren zur Schwächung und/oder zur Lösung der Klebeverbindung eines erfindungsgemäßen Verbundbauteils.

Die Erfindung wird in den beigefügten Patentansprüchen definiert. Bevorzugte Aspekte der vorliegenden Erfindung ergeben sich überdies aus der nachfolgenden Beschreibung einschließlich der Beispiele.

Soweit für einen erfindungsgemäßen Aspekt bestimmte Ausgestaltungen als bevorzugt bezeichnet werden, gelten die entsprechenden Ausführungen jeweils auch für die anderen Aspekte der vorliegenden Erfindung, *mutatis mutandis.* Bevorzugte individuelle Merkmale erfindungsgemäßer Aspekte (wie in den Ansprüchen definiert und/oder in der Beschreibung offenbart) sind miteinander kombinierbar und werden vorzugsweise miteinander kombiniert, sofern sich im Einzelfall für den Fachmann aus dem vorliegenden Text nichts anderes ergibt.

Klebeverbindungen werden normalerweise für eine dauerhafte Verbindung von Bauteilen bzw. Fügeteilen ausgelegt und sollen bis mindestens zum Ende der Produktlebensdauer diese stabile Verbindung sicher aufrechterhalten. Im Gegensatz zu z.B. Schraub- oder Steckverbindungen ist eine Klebung üblicherweise nicht für ein nachträgliches Lösen geeignet. Dies erschwert bzw. verhindert die Wiederverwendung (z.B. im Rahmen eines Reparatur- oder Wartungsfalls) sowie das sortenreine Recyceln von verklebten Bauteilmaterialien.

Das Trennen von miteinander verklebten Bauteilen (Fügeteilen) erfordert nämlich das Aufwenden von vergleichsweise hohen mechanischen Kräften oder hohen Temperaturen. Dabei werden beim Versuch der Trennung von miteinander verklebten Bauteilen häufig die Bauteile selbst beschädigt. Auch passiert es nicht selten, dass beim Versuch der Trennung von miteinander verklebten Bauteilen zum Teil Bruchstücke der unterschiedlichen Bauteile miteinander verklebt bleiben; eine vollständige Trennung beider miteinander verklebter Bauteile voneinander also häufig nicht gelingt. Die Trennung von miteinander verklebten Bauteilen wird auch dadurch erschwert, dass Klebungen häufig als flächige Verbindungen ausgelegt werden und nicht punktuell, wie z.B. Schrauben oder Nieten. Hohe Temperaturen beim Löseversuch von Klebeverbindungen können zudem die Entstehung von gesundheits- und umweltschädlichen Zersetzungsprodukten verursachen.

Es besteht somit ein Bedarf nach effektiven Wegen, um miteinander verklebte Bauteile (Fügeteile) auf möglichst einfache und zerstörungsfreie Art und Weise für z.B. Reparatur-, Wiederverwertungs- oder Recyclingzwecke voneinander zu trennen. Ein steigender Bedarf für eine einfache und effektive Lösung von Klebeverbindungen ergibt sich auch unter dem Gesichtspunkt des steigenden gesellschaftlichen Bewusstseins nach mehr Nachhaltigkeit und den immer strenger werdenden gesetzlichen Vorgaben hinsichtlich der Wiederverwertbarkeit und Rezyklierbarkeit von Materialien (beispielsweise sei hier auf den "circular economy action plan" der Europäischen Union verwiesen).

Einige Ansätze zur Schwächung bzw. Lösung von Klebeverbindungen sind bereits aus dem Stand der Technik bekannt.

US 2006/0219350 A1 offenbart ein Verfahren zum Verbinden und Entbinden von zwei oder mehr Flächen oder Trägern oder Schichten eines Klebesystems, wobei das Klebesystem eine Klebstoffzusammensetzung an seinen verbundenen Oberflächen umfasst und wobei in der Klebstoffzusammensetzung als Treibmittel dienende sogenannte Mikrosphären (microspheres) in dispergierter Form - das heißt, fein verteilt - enthalten sind. Die in der Klebstoffzusammensetzung dispergiert vorliegenden, als Treibmittel dienenden Mikrosphären dienen dabei dem Zweck, dass bei Erwärmung der Klebstoffzusammensetzung bzw. der Mikrosphären diese expandieren und so eine Schwächung der Klebeverbindung herbeigeführt wird. Der Nachteil der Dispersion von Treibmittel bzw. Treibmitteleinheiten in einer Klebstoffzusammensetzung besteht darin, dass hierdurch der Klebstoff in seinen Verarbeitungs-, Lager- und Endeigenschaften (z.B. Festigkeit, Medien- und Langzeitbeständigkeit) verändert wird. Die Veränderung der Eigenschaften einer Klebstoffzusammensetzung durch Zumischen von Treibmittel bzw. Treibmitteleinheiten lässt sich durch die große Kontaktfläche zwischen Klebstoff und darin dispergiertem Treibmittel und die hierdurch resultierende starke Wechselwirkung zwischen Klebstoff und Treibmitteleinheiten erklären.

Nach dem allgemeinen Stand der Technik wird für jede Klebeanwendung ein Klebstoff ausgewählt und qualifiziert (sogenannte problemspezifische Klebstoffauswahl). Die Vielfalt der kommerziell am Markt verfügbaren Klebstoffe ist sehr groß, sodass bei der Klebstoffauswahl für eine spezifische Anwendung üblicherweise mehrere Systeme gleichzeitig in den Auswahl- und Qualifizierungsprozess gelangen und am Ende häufig nur ein Klebstoff den jeweiligen spezifischen Anforderungen genügt. Das Zumischen von Treibmittel zum für eine bestimmte Anwendung als geeignet bekannten Klebstoff verändert nunmehr die Eigenschaften des Klebstoffs derart stark, dass ein erneuter Qualifizierungsprozess für diese (Treibmittel enthaltende) neue Klebstoffzusammensetzung notwendig wird, um zu gewährleisten, dass auch die neue/veränderte Klebstoffzusammensetzung den erwarteten Anforderungen an die Klebeverbindung genügt.

Die Zumischung von Treibmittel zu bekannten Klebstoffzusammensetzungen macht somit für jede Klebeanwendung die erneute Durchführung eines Auswahl- und Qualifizierungsprozesses für den zu verwendenden Klebstoff notwendig.

Zudem stellen viele Treibmittel reaktive Spezies dar, die mit bestimmten Klebstoffformulierungen chemische Reaktionen eingehen können. Auch unter diesem Gesichtspunkt ist eine starke Beeinflussung der Eigenschaften des Klebstoffs durch die Zumischung von Treibmittel zu erwarten.

DE 10 2011 087 636 A1 offenbart ein Verfahren zum Entfernen einer durch Verklebung in einen Rahmen eingesetzten Scheibe, wobei im Bereich der Klebeverbindung zwischen Scheibe und Rahmen eine durch Erwärmung aktivierbare Funktionsschicht vorgesehen ist und wobei durch Erwärmung der Funktionsschicht ein zumindest teilweises Lösen der Verklebung zwischen Scheibe und Rahmen erreicht wird, indem unter anderem durch Erwärmung auf ein bestimmtes Temperaturniveau die Funktionsschicht expandiert wird. Wesentlich hierbei ist laut DE 10 2011 087 636 A1, dass die wirksamen Bestandteile in der Funktionsschicht (etwa die eine Expansion der Funktionsschicht bewirkenden Bestandteile) in einer möglichst homogenen Verteilung in der Funktionsschicht vorhanden sind.

Da bei Verwendung einer Funktionsschicht (welche die gesamte Kontaktfläche zwischen den miteinander verbundenen Bauteilen umspannt) auch die Klebewirkung durch die Funktionsschicht selbst realisiert werden muss, ergeben sich auch hier die Nachteile, dass durch Dispersion von expansionswirksamen Bestandteilen in die Funktionsschicht die Klebeeigenschaften der Schicht erheblich beeinflusst bzw. beeinträchtigt werden. Dies erkennt auch DE 10 2011 087 636 A1, da es hier heißt, dass wirksame Bestandteile nicht in zu hoher Konzentration in die Klebeverbindung eingebracht sein dürfen, da dies ansonsten zu einer Reduzierung der Adhäsionsfestigkeit des Klebstoffs führen würde.

Somit ist auch die Einführung des in DE 10 2011 087 636 A1 beschriebenen Verfahrens bzw. die Einführung einer dort beschriebenen Funktionsschicht in ein bestehendes Klebeverfahren nicht ohne Weiteres möglich. Auch hier ist der bisher verwendete Klebstoff erneut zu qualifizieren und zu prüfen, ob mit der Funktionsschicht die Anforderungen an die Klebung erfüllt werden. Auch bei einem Mehrschichtsystem muss die Funktionsschicht eine ausreichend gute Haftung aufweisen, die mindestens so hoch wie die von den weiteren verwendeten Schichten ist. Anderenfalls würde die Funktionsschicht das schwächste Glied der Verbindung bilden und den Zusammenhalt des Verbundsystems massiv beeinträchtigen.

DE 10 2012 203 794 A1 offenbart einen Schmelzklebstoff enthaltend 20 bis 90 Gew.-% mindestens eines Polyamids mit einem Molekulargewicht von 10.000 bis 250.000 g/mol, 1 bis 25 Gew.-% mindestens eines organischen oder anorganischen Salzes und 0 bis 60 Gew.-% weiterer Additive, welcher unter Einwirkung einer elektrischen Spannung seine Klebkraft vermindert. Die Nachteile eines solchen Klebstoffs (betreffend die Veränderung bzw. Beeinträchtigung der Eigenschaften des Klebstoffs durch Zumischen eines die Klebewirkung beeinflussenden zusätzlichen Bestandteils) sind die gleichen wie zu den vorstehend genannten Dokumenten bereits erläutert.

Vor dem Hintergrund der oben genannten Nachteile aus dem Stand der Technik war es eine primäre Aufgabe der vorliegenden Erfindung, Mittel und Lösungswege bereitzustellen, welche eine effektive und einfache Art der (zielgerichteten) Schwächung oder Lösung von Klebeverbindungen ermöglichen, ohne dass die Eigenschaften des für die Klebeverbindung verwendeten Klebstoffs bzw. die Eigenschaften der Klebeverbindung selbst (zu stark) beeinflusst bzw. beeinträchtigt werden. Die Aufgabe der Erfindung bestand auch darin, Mittel für einen einfachen und effektiven Weg des Lösens bzw. Schwächens von Klebeverbindungen bereitzustellen, welche quasi universell für jede Art der Klebeverbindung geeignet sind, ohne dass im Vorfeld Tests bezüglich der Kompatibilität des Entklebemittels mit dem zu verwendenden Klebstoff notwendig sind.

Weitere Aufgaben ergeben sich aus der nachfolgenden Beschreibung und den Patentansprüchen.

Die primäre Aufgabe der vorliegenden Erfindung wird gelöst durch ein thermisch aktivierbares Expansionselement zur Schwächung oder Lösung von Klebeverbindungen, umfassend eine Vielzahl von Treibmitteleinheiten, umfassend oder bestehend aus ein oder mehreren (thermisch aktivierbaren) physikalischen und/oder chemischen Treibmitteln, umgeben von einer Matrix, umfassend oder bestehend aus ein oder mehreren Substanzen ausgewählt aus der Gruppe bestehend aus Polymeren, Oligomeren und monomeren Vorläuferverbindungen hiervon.

Im Vergleich zum aus dem Stand der Technik bekannten Dispergieren von Treibmittel in einen Klebstoff, wie z.B. auch in der DE10 2009 019 483 A1 und auch in der DE10 2019 220 366 A1 offenbart, lässt sich durch den Einsatz bzw. das Einbringen von erfindungsgemäßen thermisch aktivierbaren Expansionselementen die Kontaktfläche zwischen dem Klebstoff und den expansionsfähigen Elementen drastisch reduzieren, was wiederum eine Verringerung (oder gar ein Ausbleiben) des Einflusses des in die Klebeverbindung eingebrachten Treibmittels auf die Eigenschaften des Klebstoffs bewirkt. Gleichzeitig erlaubt der Einsatz von erfindungsgemäßen thermisch aktivierbaren Expansionselementen eine einfache Applikation von Treibmittel bzw. Treibmitteleinheiten in hochkonzentrierter Form auf eine lokal begrenzte Stelle der zu verklebenden Fügeteiloberflächen bzw. auf eine lokal begrenzte Stelle innerhalb der Klebeverbindung. Überraschenderweise hat sich gezeigt, dass sich durch eine solche Konzentration des Treibmittels auf bestimmte, lokal begrenzte Stellen innerhalb der Klebeverbindung auch die durch thermische Aktivierung der Expansionselemente erreichbare Entklebewirkung (im Vergleich zu der Entklebewirkung einer gleichen Menge an Treibmittel, welche im Klebstoff homogen dispergiert vorliegt) deutlich steigern lässt. Des Weiteren können die erfindungsgemäßen thermisch aktivierbaren Expansionselemente an beliebiger Stelle innerhalb der Klebeverbindung zwischen verklebten Fügeteilen eingebracht werden und somit z. B. bewusst an neuralgischen Stellen der Klebeverbindung positioniert werden, wodurch sich die Entklebewirkung der thermisch aktivierbaren Expansionselemente noch einmal weiter steigern lässt.

Ein weiterer Vorteil der erfindungsgemäßen thermisch aktivierbaren Expansionselemente gegenüber aus dem Stand der Technik bekannten Ansätzen zur Lösung von Klebeverbindungen besteht darin, dass die erfindungsgemäßen thermisch aktivierbaren Expansionselemente völlig unabhängig vom zu verwendenden Klebstoff gelagert und vertrieben werden können und jeweils bei Bedarf (z. B. durch Vorapplikation des thermisch aktivierbaren Expansionselements vor Aufbringung des Klebstoffs und Ausbildung der Klebeverbindung) in eine Klebeverbindung eingebracht werden können, und zwar völlig unabhängig vom zu verwendenden Klebstoff, das heißt, ohne die Gefahr einer Beeinflussung des jeweiligen zu verwendenden Klebstoffs durch die thermisch aktivierbaren Expansionselemente. Auch kann eine Feineinstellung der Eigenschaften von erfindungsgemäßen thermisch aktivierbaren Expansionselementen, wie z.B. die Expansionskraft oder die Auslösetemperatur, unabhängig von dem für die Klebeverbindung zu verwendenden Klebstoff (d.h. ohne Rücksichtnahme auf eine etwaige Veränderung der Eigenschaften des Klebstoffs durch Änderung der Eigenschaften des thermisch aktivierbaren Expansionselements) vorgenommen werden. Die erfindungsgemäßen thermisch aktivierbaren Expansionselemente sind somit universell und flexibel in beliebigen Arten von Klebeverbindungen einsetzbar.

Unter einem thermisch aktivierbaren Expansionselement ist im Sinne der vorliegenden Erfindung ein Element zu verstehen, welches sich bei Erwärmen auf eine bestimmte Temperatur ausdehnt bzw. expandiert und hierdurch sein Volumen vergrößert. Die Expansion wird hierbei durch die von den erfindungsgemäßen thermisch aktivierbaren Expansionselementen umfassten Treibmitteleinheiten hervorgerufen, welche entweder bei Erhöhung der Temperatur selbst ihr Volumen vergrößern (sogenannte physikalische Treibmittel) und/oder bei Erreichen einer bestimmten Temperatur unter Bildung von gasförmigen Produkten reagieren (sogenannte chemische Treibmittel) und so einen inneren Druck erzeugen, der eine Expansion der die Treibmitteleinheiten umgebenden Matrix erzwingt und dadurch insgesamt eine Expansion des thermisch aktivierbaren Expansionselement bewirkt.

Die Temperatur, bei welcher die Expansion des erfindungsgemäßen thermisch aktivierbaren Expansionselements erfolgt (auch als Auslösetemperatur bezeichnet), hängt von der Wahl des eingesetzten Treibmittels ab und kann je nach Bedarf durch Änderung des Treibmittels variiert werden. Vorzugsweise wird die Auslösetemperatur eines erfindungsgemäßen thermisch aktivierbaren Expansionselements so auf die Klebeverbindung, in welcher das thermisch aktivierbaren Expansionselement eingesetzt werden soll, abgestimmt, dass bei Erreichen der Auslösetemperatur bereits eine beginnende Erweichung des für die Klebeverbindung verwendeten Klebstoffs zu beobachten ist. Durch das Abstimmen der Auslösetemperatur auf die beginnende Erweichungstemperatur des für die Klebeverbindung verwendeten Klebstoffs kann die Entklebewirkung gesteigert werden.

Thermisch aktivierbare Expansionselemente im Sinne der vorliegenden Erfindung zeichnen sich zudem dadurch aus, dass diese durch ihre Handreichung als separates Element klar abgrenzbare aber frei wählbare Maße hinsichtlich Höhe, Länge und Breite sowie Form aufweisen und somit - anders als eine auf einem Fügeteil aufgebrachte Schicht - nicht zwangsläufig die gesamte Fügefläche der zu verklebenden Fügeteile einnehmen bzw. bedecken müssen (die Flächenausdehnung der Expansionselemente also kleiner als die Klebefläche der verklebten Fügeteile sein kann). In dieser Hinsicht unterscheiden sich die erfindungsgemäßen thermisch aktivierbaren Expansionselemente z. B. von der in US 2006/0219350 A1 offenbarten Klebeverbindung mit dispergiertem Treibmittel oder der in DE 10 2011 087 636 A1 offenbarten Funktionsschicht mit darin homogen verteilten expandierbaren Bestandteilen, da sowohl in US 2006/0219350 A1 als auch in DE 10 2011 087 636 A1 die Treibmitteleinheiten bzw. expandierbaren Bestandteile zwangsläufig durch ihre Delokalisierung im Klebstoff bzw. in der Funktionsschicht über die gesamte Fläche der Klebeverbindung und somit über die gesamte Fügefläche verteilt sind und auch nicht auf eine nur bestimmte begrenzte Teilfläche der Gesamtfügefläche beschränkbar sind.

Die Zusammensetzung bzw. Beschaffenheit der die Vielzahl von Treibmitteleinheiten umgebenden Matrix des erfindungsgemäßen thermisch aktivierbaren Expansionselements kann grundsätzlich unabhängig vom eingesetzten Treibmittel gewählt werden. Vorzugsweise unterscheidet sich die Matrix der erfindungsgemäßen thermisch aktivierbaren Expansionselemente stofflich von dem für die Klebeverbindung (in welcher das jeweilige thermisch aktivierbare Expansionselement eingesetzt werden soll) eingesetzten Klebstoff.

Die die Vielzahl von Treibmitteleinheiten umgebende Matrix kann sowohl in fester als auch in (hochviskoser) flüssiger Form vorliegen. Bevorzugt hat die die Vielzahl von Treibmitteleinheiten umgebende Matrix (bei 25 °C und Atmosphärendruck) eine feste Form.

Bevorzugt ist ein erfindungsgemäßes thermisch aktivierbares Expansionselement, wobei das thermisch aktivierbare Expansionselement
nicht kugelförmig ist
   und/oder
eine Dicke (bzw. Höhe) von mindestens 0,1 mm aufweist, vorzugsweise von mindestens einem Millimeter,
   und/oder
ein Aspektverhältnis Dicke zu Breite von mindestens 1:10 aufweist,
   und/oder
eine Breite von mindestens einem Millimeter aufweist,
   und/oder
eine Länge von mindestens 10 Millimetern aufweist,
und/oder wobei mindestens eine Seitenfläche des thermisch aktivierbaren Expansionselements eine Fläche von mindestens 0,2 mm² aufweist.

Die vorstehend genannten bevorzugten Maße und Formen für thermisch aktivierbare Expansionselemente haben sich in Untersuchungen als besonders vorteilhaft hinsichtlich der Handhabung, Darreichung und Applikation der thermisch aktivierbaren Expansionselemente erwiesen.

Ebenfalls bevorzugt ist ein erfindungsgemäßes thermisch aktivierbares Expansionselement, wobei
die ein oder mehreren Substanzen für die Matrix der Expansionselemente ausgewählt sind aus der Gruppe bestehend aus Thermoplasten, Elastomeren, Duromeren und deren jeweiligen monomeren Vorläuferverbindungen, wobei die ein oder mehreren Substanzen für die Matrix der Expansionselemente vorzugsweise ausgewählt sind aus der Gruppe bestehend aus Polyamiden, Ethylen-Vinylacetat-Copolymeren (EVAC), Polyvinylacetaten (PVA), Polyurethanen, Polyestern, Polysterolen, Plastisolen, Polyethylen, Polypropylen, Polytetrafluorethylen, Polyvinylalkoholen, Epoxiden, Acrylaten, Cyanacrylaten und deren jeweiligen monomeren Vorläuferverbindungen
   und/oder
die ein oder mehrere Treibmittel, vorzugsweise die ein oder mehreren physikalischen Treibmittel, Mikrosphären sind
   und/oder
die ein oder mehreren chemischen Treibmittel ausgewählt sind aus der Gruppe bestehend aus Azodicarbonamid (ADA), p,p'-Oxybisbenzolsulfonylhydrazid (OBSH), p-Toluolsulfonylhydrazid (TSH), Natriumhydrogencarbonat/Zitronensäure-Gemische und Blähgraphit.

Mikrosphären (microspheres) sind im Sinne der vorliegenden Erfindung Mikrohohlkugeln mit einem Durchmesser von typischerweise 10 bis 120 Mikrometern, welche mit einem Lösemittel, einem Gas oder einer anderen eine Expansion bei Erwärmung hervorrufenden Substanz gefüllt sind. Die Hülle der Mikrosphären besteht aus einem dehnbaren bzw. elastischen Material wie z. B. einem thermoplastischen Polymer. Mikrosphären sind aus dem Stand der Technik als Treibmittel bekannt und werden im Sinne der vorliegenden Erfindung ausdrücklich zu den Treibmitteln hinzugezählt. Beispiele für kommerziell erwerbliche Mikrosphären sind die von den Firmen Nouryon und AkzoNobel unter dem Handelsnamen Expancel^{®} vertriebenen Mikrosphären und die von der Firma Tramaco unter dem Handelsnamen UNICELL^{®} vertriebenen Mikrosphären. Typische Expansionstemperaturen für Mikrosphären liegen im Bereich von 60 bis 180 °C.

Als chemische Treibmittel werden bevorzugt chemische Treibmittel mit einer Aktivierungstemperatur bzw. Zersetzungstemperatur im Bereich von 40 - 210 °C eingesetzt. Die Aktivierungstemperatur bzw. Zersetzungstemperatur ist jene Temperatur, bei welcher das chemische Treibmittel reagiert bzw. bei welcher sich das chemische Treibmittel zersetzt. Die Aktivierungstemperatur bzw. Zersetzungstemperatur von chemischen Treibmitteln kann durch Zugabe von Additiven verändert werden. So kann etwa die Zersetzungstemperatur von Azodicarbonamid (ADA) durch Zugabe von z. B. Zinkoxid herabgesetzt werden.

Die von erfindungsgemäßen thermisch aktivierbaren Expansionselementen umfassten chemischen Treibmittel werden vorzugsweise in Pulverform eingesetzt, wobei die Größe der Partikel des Pulvers von wenigen Mikrometern, wie z. B. 10 µm, bis einigen Millimetern reichen kann.

Bevorzugt umfasst ein erfindungsgemäßes thermisch aktivierbares Expansionselement auf (zumindest einer Teilfläche) seiner Oberfläche eine (dünne) Klebstoffschicht (z.B. eines Haftklebers) oder Klebefolie. Eine solche Klebstoffschicht oder Klebefolie ermöglicht eine einfache Fixierung des thermisch aktivierbaren Expansionselements auf einem Fügeteil.

Besonders bevorzugt ist das thermisch aktivierbare Expansionselement als ein- oder doppelseitiges Klebeband ausgestaltet. Das Klebeband ist dabei so ausgestaltet, dass es, neben dem Haftklebstoff welcher für die Ausbildung der Klebverbindung essentiell ist, zusätzliche expandierbare Bereiche aus einer Vielzahl von Treibmitteleinheiten (wie vorstehend und in den Ansprüchen definiert) umgeben von einer Matrix (wie vorstehend und in den Ansprüchen definiert) aufweist, die thermisch zur Expansion gebracht werden können um die Klebverbindung zu lösen. Diese Bereiche können in die Klebmasse an sich, oder wenn vorhanden, in weitere Bestandteile des Klebebands, wie z.B. ein Trägermaterial oder Schaumrücken, eingearbeitet sein und können als abgegrenzte Punkte oder linienförmig entlang des ganzen Klebebands ausgeführt werden. Die Dimensionierung und Geometrie der expandierbaren Bereiche wird vorzugsweise auf das Klebeband und/oder auf die Klebanwendung angepasst. In einer bevorzugten Ausgestaltung nimmt die Fläche der expandierbaren Bereiche nur einen gewissen Anteil der insgesamt zur Verfügung stehenden Klebfläche des Klebebands ein, so dass bevorzugt ein überwiegend großer Teil des Klebebands einem konventionellen Klebeband entspricht und keine expandierbaren Bereiche aufweist.

Teil der Erfindung ist auch die Verwendung von ein oder mehreren
erfindungsgemäßen oder bevorzugt erfindungsgemäßen thermisch aktivierbaren Expansionselementen (wie oben und in den Ansprüchen definiert),
   und/oder
thermisch aktivierbaren Formteilen umfassend oder bestehend aus ein oder mehreren (thermisch aktivierbaren) chemischen Treibmitteln, wobei die ein oder mehreren thermisch aktivierbaren Formteile entlang mindestens einer Ausdehnungsrichtung eine Ausdehnung von mindestens 1 mm, vorzugsweise von mindestens 10 mm, aufweisen,
in einer Klebeverbindung von miteinander verklebten Fügeteilen zur Schwächung oder zum Lösen der Klebeverbindung, wobei vorzugsweise das eine oder die mehreren thermisch aktivierbaren Expansionselemente und/oder Formteile jeweils mit mindestens einem der miteinander verklebten Fügeteile in Kontakt stehen.

Die vorstehend definierten erfindungsgemäß zu verwendenden thermisch aktivierbaren Formteile unterscheiden sich dadurch von den erfindungsgemäßen bzw. bevorzugt erfindungsgemäßen thermisch aktivierbaren Expansionselementen, dass die thermisch aktivierbaren Formteile keine von einer Matrix umgebenen Treibmitteinheiten darstellen, sondern die thermisch aktivierbaren Formteile für sich genommen ein kompaktes, zusammenhängendes Stück chemisches Treibmittel darstellen (die erfindungsgemäß zu verwendenden thermisch aktivierbaren Formteile also nicht pulverförmig sind), welches dazu geeignet ist bei einer definierten Auslösetemperatur durch chemische Reaktion und/oder durch Zersetzung eine große Menge Gas freizusetzen. Der durch die freigesetzte Menge an Gas entstehende Druck bewirkt wiederum eine Schwächung bzw. ein Lösen der Klebeverbindung, in welcher das thermisch aktivierbaren Formteil verwendet wird.

Die Verwendung von (kompakten, komprimierten) Stücken an chemischen Treibmittel in Form von den erfindungsgemäß zu verwendenden thermisch aktivierbaren Formteilen hat ebenfalls den Vorteil, dass zum einen die Kontaktfläche zwischen Klebstoff und Treibmittel verringert wird und somit der Einfluss des Treibmittels auf den Klebstoff bzw. die Klebeverbindung reduziert wird. Zum anderen wird auch durch die Verwendung der thermisch aktivierbaren Formteile die durch die Reaktion/Zersetzung des chemischen Treibmittels hervorgerufene Krafteinwirkung auf die Klebeverbindung auf lokal begrenzte Stellen konzentriert, wodurch sich überraschenderweise die Entklebewirkung (im Vergleich zu einer gleichen Menge an in der Klebeverbindung dispergiertem Treibmittel) steigern lässt. Die vorstehend angegebene Größe der erfindungsgemäß zu verwendenden thermisch aktivierbaren Formteile bewirkt zudem eine gute Handhabung und Applikation derselben.

Die Kontaktierung der ein oder die mehreren thermisch aktivierbaren Expansionselemente und/oder Formteile mit jeweils mindestens einem der miteinander verklebten Fügeteile hat den Vorteil, dass hierdurch die durch Expansion bzw. Gasfreisetzung erzeugte Krafteinwirkung direkt bei bzw. in unmittelbarer Nähe der Grenzschicht zwischen Klebstoff und Fügeteil auftritt, wodurch die Entklebewirkung nochmals verbessert wird.

Ein "in Kontakt stehen" zwischen thermisch aktivierbaren Expansionselement bzw. Formteil und verklebtem Fügeteil schließt im Sinne der vorliegenden Verbindung nicht aus, dass sich zwischen dem thermisch aktivierbaren Expansionselement bzw. Formteil und dem verklebtem Fügeteil noch eine dünne (zur ursprünglichen Fixierung des thermisch aktivierbaren Expansionselements bzw. Formteils auf dem Fügeteil verwendete) Klebstoffschicht, Klebefolie oder ein Klebstoffpunkt befindet.

Ist für die Klebung eine Oberflächenvorbehandlung des Fügeteils (wie z.B. die Applikation eines Haftvermittlers, Primers, Aktivators, Plasmabehandlung o.ä.) erforderlich, so kann das thermisch aktivierbare Expansionselement und/oder Formteil auch auf die vorbehandelte Oberfläche aufgebracht werden. Alternativ kann die Oberflächenvorbehandlung auch bei schon appliziertem thermisch aktivierbaren Expansionselement und/oder Formteil auf selbiges erfolgen. Hierbei ist nur sicherzustellen, dass die Oberflächenvorbehandlung das Expansionselement und/oder Formteil nicht von der Oberfläche ablöst, oder dieses thermisch aktiviert.

Bevorzugt sind erfindungsgemäß zu verwendende thermisch aktivierbare Formteile, welche ausschließlich aus chemischem Treibmittel bestehen und (bei 25 °C und Atmosphärendruck) im festen Aggregatszustand vorliegen.

Bevorzugt werden erfindungsgemäße oder bevorzugt erfindungsgemäße thermisch aktivierbaren Expansionselemente und/oder erfindungsgemäß zu verwendende thermisch aktivierbare Formteile in Klebeverbindungen für die Automobilindustrie, den Schienenfahrzeugbau, die Luftfahrt, die Schifffahrt oder die Bauindustrie, vorzugsweise den Holzbau, verwendet.

Weiter bevorzugt werden erfindungsgemäße oder bevorzugt erfindungsgemäße thermisch aktivierbaren Expansionselemente und/oder erfindungsgemäß zu verwendende thermisch aktivierbare Formteile für strukturelle und nicht strukturelle Klebungen (d.h. in hochfesten bis niederfesten Klebeverbindungen), in Dichtungen wie auch in Klebeverbindungen von geklebten Haltern in der Luftfahrt und in Klebeverbindungen von Anbauteilen jeglicher Art verwendet.

Bevorzugt ist eine erfindungsgemäße Verwendung, wobei
die ein oder mehreren thermisch aktivierbaren Expansionselementen und/oder Formteile zusätzlich als Distanzstück zwischen den miteinander verklebten Fügeteilen dienen
   und/oder
die ein oder mehreren thermisch aktivierbaren Formteile eine Dicke von mindestens 0,1 mm, vorzugsweise von mindestens einem Millimeter, eine Breite von mindestens einem Millimeter, und eine Länge von mindestens 10 Millimetern aufweisen
   und/oder
die ein oder mehreren thermisch aktivierbaren Formteile aus einem Kunststoff, vorzugsweise aus Celluloid oder Nitrocellulose, bestehen.

Celluloid und Nitrocellulose stellen im Sinne der vorliegenden Erfindung ausdrücklich chemische Treibmittel dar.

In Fällen in denen die ein oder mehreren thermisch aktivierbaren Expansionselementen und/oder Formteile zusätzlich als Distanzstück zwischen den miteinander verklebten Fügeteilen dienen, stehen diese mit beiden miteinander verklebten Fügeteile in Kontakt, sodass sowohl der Abstand der Fügeteile zueinander als auch die Dicke der zwischen den verklebten Fügeteilen befindlichen Klebstoffschicht durch die Dicke der thermisch aktivierbaren Expansionselemente und/oder Formteile vorgegeben wird. In diesem Fall erfüllen die thermisch aktivierbaren Expansionselemente und/oder Formteile somit eine Doppelfunktion, durch welche der Einsatz anderer Distanzstücke oder Vorgehensweisen zur Einstellung der Dicke der zwischen den verklebten Fügeteilen befindlichen Klebstoffschicht überflüssig wird. Die vorstehend angegebenen Dicken für die erfindungsgemäß zu verwendenden thermisch aktivierbaren Formteile haben sich als besonders vorteilhaft für die zusätzliche Verwendung als Distanzstück erwiesen.

Teil der Erfindung ist auch ein Fügeteil mit
ein oder mehreren erfindungsgemäßen oder bevorzugt erfindungsgemäßen thermisch aktivierbaren Expansionselementen (wie oben und in den Ansprüchen definiert),
   und/oder
ein oder mehreren erfindungsgemäß oder bevorzugt erfindungsgemäß zu verwendenden thermisch aktivierbaren Formteilen (wie oben und in den Ansprüchen definiert),
auf der Oberfläche des Fügeteils.

Die Bereitstellung von Fügeteilen mit vorapplizierten thermisch aktivierbaren Expansionselementen und/oder Formteilen erleichtert den Fertigungsprozess, da der Schritt des Applizierens der thermisch aktivierbaren Expansionselemente und/oder Formteile entfällt. Die thermisch aktivierbaren Expansionselemente und/oder Formteile können hierbei in beliebiger Anzahl und unter Verwendung beliebiger Applikationsmuster (z.B. in Form von Punkten, Strichen oder Kombinationen davon bis hin zu komplexen Mustern) auf der Oberfläche des Fügeteils vorhanden sein, je nach Art des Anwendungsbereiches bzw. der Ausmaße und Form des Fügeteils und der gewünschten, hervorzurufenden Entklebewirkung.

Vorzugsweise werden die thermisch aktivierbaren Expansionselemente und/oder Formteile mittels einer dünnen Klebeschicht, einer Klebefolie oder eines Klebepunktes an der Oberfläche des Fügeteils fixiert.

Teil der Erfindung ist ebenfalls ein Verbundbauteil, umfassend
mindestens zwei durch einen (abgebundenen) Klebstoff miteinander verbundene Fügeteile
   und
ein oder mehrere, zwischen den miteinander verbundenen Fügeteilen angeordnete,
   erfindungsgemäße oder bevorzugt erfindungsgemäße thermisch aktivierbare Expansionselemente (wie oben und in den Ansprüchen definiert),
      und/oder
   erfindungsgemäß oder bevorzugt erfindungsgemäß zu verwendende thermisch aktivierbare Formteile (wie oben und in den Ansprüchen definiert),
wobei die ein oder mehreren thermisch aktivierbaren Expansionselemente und/oder Formteile jeweils mit mindestens einem der durch den Klebstoff miteinander verbundenen Fügeteile in Kontakt stehen.

Wie oben bereits erläutert, sind die thermisch aktivierbaren Expansionselemente und/oder Formteile hierbei dazu eingerichtet, die Klebeverbindung zwischen den miteinander verbundenen Fügeteilen infolge thermischer Aktivierung zu schwächen oder zu lösen.

Bevorzugt ist ein erfindungsgemäßes Verbundteil, wobei
sich die Matrix stofflich vom Klebstoff unterscheidet
   und/oder
die ein oder mehreren thermisch aktivierbaren Expansionselemente und/oder Formteile jeweils mit beiden durch den Klebstoff miteinander verbundenen Fügeteilen in Kontakt stehen
   und/oder
die Gesamtfläche der zwischen den miteinander verbundenen Fügeteilen angeordneten thermisch aktivierbaren Expansionselemente und/oder Formteile weniger als 100% der überlappenden Fläche beider miteinander verbundenen Fügeteile ausmacht, vorzugsweise weniger als 50%, besonders vorzugsweise weniger als 20%, ganz besonders vorzugsweise weniger als 5%.

Die Verringerung des Anteils der Gesamtfläche der zwischen den miteinander verbundenen Fügeteilen angeordneten thermisch aktivierbaren Expansionselemente und/oder Formteile an der Klebefläche ist vorteilhaft, da die ursprünglich (d.h. ohne Implementierung von thermisch aktivierbaren Expansionselementen und/oder Formteilen in der Klebeverbindung) erreichbare Klebewirkung einer Klebeverbindung grundsätzlich umso besser erhalten bleibt, je weniger Fläche der Fügefläche von thermisch aktivierbaren Expansionselementen und/oder Formteilen eingenommen wird.

Ebenfalls bevorzugt ist ein erfindungsgemäßes Verbundteil, zusätzlich umfassend ein oder mehrere, zwischen den miteinander verbundenen Fügeteilen angeordnete, Suszeptoren für induktive Erwärmung und/oder Mikrowellenerwärmung, wobei die ein oder mehreren Suszeptoren vorzugsweise in direkter Nachbarschaft zu oder in den ein oder mehreren thermisch aktivierbaren Expansionselementen und/oder Formteilen angeordnet sind.

Der Einsatz von ein oder mehreren, zwischen den miteinander verbundenen Fügeteilen angeordnete, Suszeptoren ermöglicht einen direkten Wärmeeintrag in die Klebeverbindung und damit ein schnelleres Erreichen der Auslösetemperatur der ein oder mehreren thermisch aktivierbaren Expansionselemente und/oder Formteile.

Bevorzugt ist ein erfindungsgemäßes Verbundteil, wobei die ein oder mehreren thermisch aktivierbaren Expansionselemente und/oder Formteile so angeordnet sind, dass bei ungleichmäßiger Aktivierung der Expansionselemente und/oder Formteile eine zusätzliche (für die Ablösung günstige) mechanische Krafteinwirkung, vorzugsweise eine schälende Krafteinwirkung, auf die Klebeverbindung ausgeübt wird.

Durch die Erzielung einer zusätzlichen mechanischen Krafteinwirkung kann der Krafteintrag in die Klebeverbindung weiter optimiert und hierdurch die Entklebewirkung weiter erhöht werden. Beispielsweise lässt sich eine Klebeverbindung oftmals durch eine schälende Krafteinwirkung und den hierdurch auftretenden Hebeleffekt gut lösen.

Teil der Erfindung ist auch ein Verfahren zur Herstellung eines erfindungsgemäßen oder bevorzugt erfindungsgemäßen Verbundbauteils (wie oben und in den Ansprüchen definiert), wobei das Verfahren folgende Schritte umfasst:
I) Herstellen oder Bereitstellen eines ersten und eines zweiten Fügeteils;
II.a) Applizieren von ein oder mehreren erfindungsgemäßen oder bevorzugt erfindungsgemäßen thermisch aktivierbaren Expansionselementen (wie oben und in den Ansprüchen definiert), und/oder Applizieren von ein oder mehreren erfindungsgemäß oder bevorzugt erfindungsgemäß zu verwendenden thermisch aktivierbaren Formteilen (wie oben und in den Ansprüchen definiert), sowie Applizieren eines Klebstoffes auf dem ersten und/oder dem zweiten Fügeteil;
   oder
II.b) Applizieren eines Klebstoffes auf dem ersten und/oder dem zweiten Fügeteil, wobei dem Klebstoff während des Applizierens (ortsaufgelöst und dynamisch) ein oder mehrmals pulsweise ein Treibmittel (wie oben und in den Ansprüchen definiert), zudosiert wird, sodass die applizierte Klebstoffschicht ein oder mehrere lokal begrenzte Stellen mit einer Vielzahl von Treibmitteleinheiten aufweist;
III) Verkleben des ersten und des zweiten Fügeteils.

Der Klebstoff kann in Schritt II.a) auf die zuvor applizierten thermisch aktivierbaren Expansionselemente und/oder Formteile appliziert werden. Zusätzlich oder alternativ kann der Klebstoff auch auf einem der beiden Fügeteile appliziert werden, auf welchem keine thermisch aktivierbaren Expansionselemente und/oder Formteile appliziert wurden. Die thermisch aktivierbaren Expansionselemente und/oder Formteile müssen nicht zwangsläufig auf nur ein eines der beiden Fügeteile appliziert werden, sondern können auch auf beide Fügeteile aufgetragen werden, z.B. wechselseitig.

Als Alternative zur gesonderten Applikation von thermisch aktivierbaren Expansionselementen kann dem Klebstoffstrom gemäß Schritt II.b) bei dessen Applikation Pulsweise ein Treibmittel zudosiert werden. Dadurch werden in der applizierten Klebstoffraupe bzw. in dem Applikationsmuster des Klebstoffs scharf abgegrenzte Bereiche mit einem hohen Anteil an Treibmittel bzw. einer Vielzahl an Treibmitteleinheiten (d.h. thermisch aktivierbare Expansionselemente im Sinne der Erfindung) erzeugt. Die Anzahl und Ausdehnung der so erzeugten Bereiche kann über die Dosiertechnik gesteuert werden und klebtechnisch vorteilhaft vorgenommen werden.

Vorzugsweise wird das Treibmittel im Schritt II.b) in Form einer Mischung aus Treibmitteleinheiten und einer die Treibmitteleinheiten umgebenden Matrix (wie oben und in den Ansprüchen definiert) zudosiert, wobei die Matrix stofflich gleich oder verschieden von dem zu applizierenden Klebstoff sein kann.

Bevorzugt ist ein erfindungsgemäßes Verfahren zur Herstellung eines erfindungsgemäßen oder bevorzugt erfindungsgemäßen Verbundbauteils, wobei die ein oder mehreren thermisch aktivierbaren Expansionselemente in Schritt II) in flüssiger oder fester Form appliziert werden.

Bei Applikation der thermisch aktivierbaren Expansionselemente in fester Form sind die thermisch aktivierbaren Expansionselemente vorzugsweise zumindest auf einem Teilabschnitt ihrer Oberfläche mit einem Klebstoff ausgestattet, welcher zur Fixierung der thermisch aktivierbaren Expansionselemente auf dem ersten und/oder zweiten Fügeteils dient.

Mit Applikation der thermisch aktivierbaren Expansionselemente in flüssiger Form ist gemeint, dass die die Treibmitteleinheiten umgebende Matrix in flüssiger oder hochviskoser Form vorliegt. Bei einer Applikation der thermisch aktivierbaren Expansionselemente in flüssiger Form schließt sich an die Applikation vorzugsweise noch ein weiterer Schritt des Abbindens bzw. Verfestigens der flüssigen oder hochviskosen Matrix an. Die Matrix kann dabei physikalisch (z.B. durch Abkühlung einer Polymerschmelze oder Abtrocknen eines Lösemittels) oder durch chemische Reaktion abbinden bzw. sich verfestigen, wobei ein feste thermisch aktivierbare Expansionselemente auf der Oberfläche des ersten und/oder zweiten Fügeteils resultieren, welche an der jeweiligen Oberfläche des Fügeteils anhaften.

Die Applikation von thermisch aktivierbaren Expansionselementen in fester Form kann mit einer Art Greifer erfolgen. Die Applikation von thermisch aktivierbaren Expansionselementen in flüssiger Form kann zum Beispiel per Düse, Siebdruck, Lackierverfahren und Jetten erfolgen.

Teil der Erfindung ist ebenfalls ein Verfahren zur Schwächung und/oder zur Lösung der Klebeverbindung eines erfindungsgemäßen oder bevorzugt erfindungsgemäßen Verbundbauteils (wie oben und in den Ansprüchen definiert), wobei das Verfahren folgende Schritte umfasst:
- Bereitstellen eines erfindungsgemäßen oder bevorzugt erfindungsgemäßen Verbundbauteils (wie oben und in den Ansprüchen definiert),
- Erwärmen der ein oder mehreren thermisch aktivierbaren Expansionselemente und/oder Formteile des Verbundbauteils, sodass die Auslösetemperatur der thermisch aktivierbaren Expansionselemente und/oder Formteile erreicht wird und eine Expansion der ein oder mehreren thermisch aktivierbaren Expansionselemente und/oder Formteile stattfindet.

Bevorzugt ist ein erfindungsgemäßes Verfahren zur Schwächung und/oder zur Lösung der Klebeverbindung eines erfindungsgemäßen oder bevorzugt erfindungsgemäßen Verbundbauteils, wobei das Erwärmen der ein oder mehreren thermisch aktivierbaren Expansionselemente und/oder Formteile
unter Verwendung von Wärmeleitung, Konvektion, Widerstandserwärmung, Wärmestrahlung, Induktion oder Mikrowellenstrahlung erfolgt
   und/oder
zeitversetzt und/oder ungleichmäßig erfolgt, so dass eine zusätzliche (für die Ablösung günstige) mechanische Krafteinwirkung auf die Klebeverbindung ausgeübt wird.

Nachfolgend wird die Erfindung anhand von Beispielen und den beigefügten Figuren näher erläutert. Die nachstehend angegebenen Beispiele sollen die Erfindung dabei näher beschreiben und erklären, ohne ihren Umfang zu beschränken.

Es zeigen:

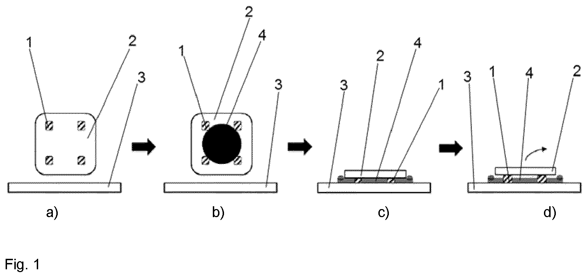

- Fig. 1:: Schematische Darstellung der Herstellung eines erfindungsgemäßen Verbundbauteils und des anschließenden Lösens von dessen Klebeverbindung. Fig. 1 a): Draufsicht eines ersten Fügeteils mit darauf applizierten erfindungsgemäßen thermisch aktivierbaren Expansionselementen und Seitenansicht eines zweiten Fügeteils. Fig. 1 b): Applikation von Klebstoff auf dem ersten Fügeteil. Fig. 1 c): Seitenansicht eines erfindungsgemäßen Verbundbauteils, erhalten durch Verkleben des ersten Fügeteils mit dem zweiten Fügeteil. Fig. 1 d): Lösen der Klebeverbindung des hergestellten Verbundbauteils durch Erwärmen auf die Auslösetemperatur der thermisch aktivierbaren Expansionselemente.

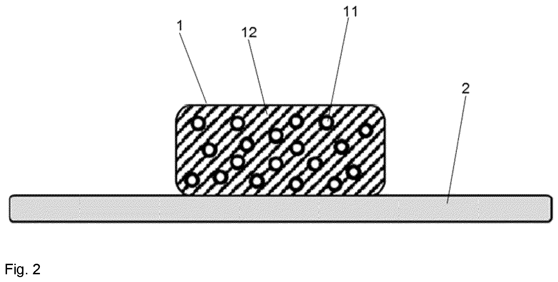

- Fig. 2:: Schematische Darstellung eines erfindungsgemäßen Fügeteils mit thermisch aktivierbarem Expansionselement auf der Oberfläche des Fügeteils.

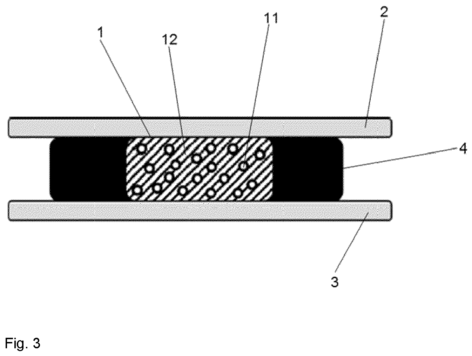

- Fig. 3:: Schematische Darstellung eines erfindungsgemäßen Verbundbauteils.

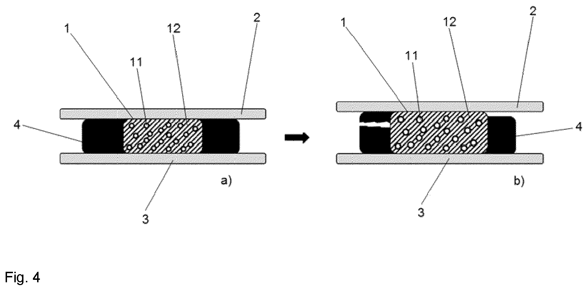

- Fig. 4:: Schematische Darstellung des Lösens der Klebeverbindung eines erfindungsgemäßen Verbundbauteils. Fig. 4 a): Schematische Darstellung eines erfindungsgemäßen Verbundbauteils. Fig. 4 b): Lösen der Klebeverbindung des erfindungsgemäßen Verbundbauteils durch Erwärmen auf die Auslösetemperatur des thermisch aktivierbaren Expansionselements.

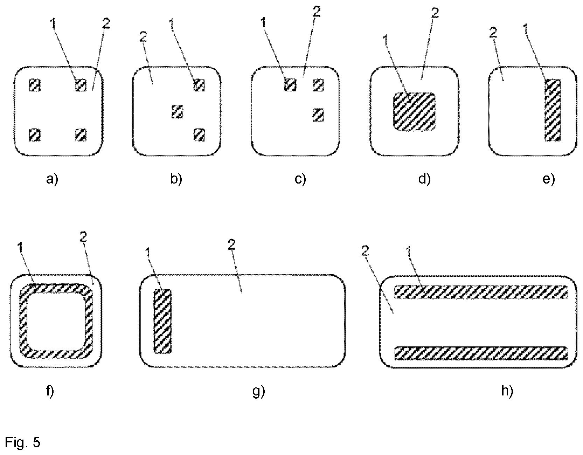

- Fig. 5:: Beispiele für Applikationsmuster von erfindungsgemäßen thermisch aktivierbaren Expansionselementen auf einem Fügeteil.
- Fig. 6:: Balkendiagramm für die Zugscherfestigkeiten der Proben A1, A2, B1, B2, C1 und C2.
- Fig. 7:: Balkendiagramm für die Zugscherfestigkeiten der Proben D1, D2, E1, E2, F1, F2, G1 und G2.

### Beispiel 1: Aufkleben eines Magneten auf einem Rotor unter Verwendung eines thermisch aktivierbaren Expansionselements und anschließendes Lösen der Klebeverbindung (erfindungsgemäß)

Auf den Rotor eines Elektromotors wurde ein Magnet (Seltenerdmagnet) aufgeklebt. Nach erfolgter Oberflächenvorbereitung für das Kleben wurden auf die Oberfläche des Magneten thermisch aktivierbare Expansionselemente aufgebracht. Diese wurden in flüssiger Form in zwei Streifen appliziert. Die Applikationsdicke der thermisch aktivierbaren Expansionselemente entsprach der der späteren Klebschichtdicke.

Die thermisch aktivierbaren Expansionselemente bestanden aus einer epoxidbasierten Polymermatrix und einer Vielzahl von Treibmitteleinheiten. Das verwendete Treibmittel lag in Pulverform vor und wurde der flüssig vorliegenden Polymermatrix zugemischt.

Nach dem Abbinden der flüssigen Polymermatrix wurde auf dem Magneten ein Epoxid-Klebstoff appliziert und der Magnet auf den Rotor des Elektromotors gefügt. Dabei wurde der Klebstoff so weit verquetscht, wie es die Höhe der thermisch aktivierbaren Expansionselemente zu ließ. Die thermisch aktivierbaren Expansionselemente stellten auf diese Weise eine definierte Klebschicht ein und wurden in die Klebung/Klebschicht eingebettet (Funktion als Distanzstück).

Zum Lösen der Klebverbindung erfolgte ein Wärmeeintrag in die Klebschicht und die davon umschlossenen thermisch aktivierbaren Expansionselemente. Die Klebverbindung wurde durch die erhöhte Temperatur geschwächt. Das in den thermisch aktivierbaren Expansionselementen enthaltene Treibmittel bewirkte bei Erreichen der Auslösetemperatur der Expansionselemente eine Expansion der thermisch aktivierbaren Expansionselemente, wodurch die Klebverbindung gelöst wurde.

### Beispiel 2: Verklebung von zwei GFK-Bauteilen unter Verwendung eines thermisch aktivierbaren Expansionselements und anschließendes Lösen der Klebeverbindung (erfindungsgemäß)

Zwei Bauteile aus glasfaserverstärktem Kunststoff (GFK) wurden überlappend mit einem 2-Komponenten Polyurethan (2K-PU) klebtechnisch verbunden werden. Die Oberflächen der beiden GFK-Bauteile wurden, wie üblich, für das Kleben vorbereitet. Danach wurde ein thermisch aktivierbares Expansionselement auf die Oberfläche von einem der beiden Bauteile im Bereich der späteren Klebung aufgebracht. Die Fixierung des thermisch aktivierbaren Expansionselements erfolgte mit Hilfe eines Hilfsklebstoffs. Nach Fixierung des thermisch aktivierbaren Expansionselements wurde der Klebstoff appliziert und die beiden Bauteile gefügt.

Das thermisch aktivierbare Expansionselement wurde zeitlich und örtlich unabhängig vom eigentlichen Klebstoff aufgebracht und wies eine Dicke auf, die der späteren Klebschichtdicke entsprach. Das thermisch aktivierbare Expansionselement erfüllte somit zusätzlich die Funktion eines Distanzstücks zur Einstellung der Klebschichtdicke.

Für die Herstellung des thermisch aktivierbaren Expansionselements wurde ein Treibmittel in ein polymeres (Polyurethan-basiertes) Matrixmaterial eingemischt. Das hierdurch resultierende flüssige thermisch aktivierbaren Expansionselement (umfassend das Matrixmaterial mit einer Vielzahl darin enthaltener Treibmitteleinheiten), wurde zum Erhalt eines festen thermisch aktivierbaren Expansionselements flach auf die gewünschte Dicke ausgestrichen. Nach Abbinden der Polymermatrix wurden das feste thermisch aktivierbare Expansionselement auf die für vorliegende Anwendung gewünschten Maße zugeschnitten.

Zum Lösen der Klebverbindung erfolgte ein Wärmeeintrag in die Klebschicht und das davon umschlossene thermisch aktivierbare Expansionselement. Die Klebverbindung wurde durch die erhöhte Temperatur geschwächt. Das in dem thermisch aktivierbaren Expansionselement enthaltene Treibmittel bewirkte bei Erreichen der Auslösetemperatur des Expansionselements eine Expansion des thermisch aktivierbaren Expansionselements, wodurch die Klebverbindung gelöst wurde.

### Beispiel 3: Verklebung von zwei Metallbauteilen unter Verwendung von thermisch aktivierbaren Formteilen (erfindungsgemäß)

Für die klebtechnische Verbindung zweier Metallbauteile mit einem 2-Komponenten-Epoxidharzklebstoff (2K-EP) wurden zunächst deren Oberflächen für die Klebung vorbereitet. Auf eines der Bauteile wurden im Bereich der Klebfläche anschließend mehrere vordimensionierte thermisch aktivierbare Formteile appliziert. Die Fixierung der thermisch aktivierbaren Formteile erfolgte dabei durch einen Hilfsklebstoff, welcher im Vorfeld als dünne Schicht auf einem Teil der Oberfläche der thermisch aktivierbaren Formteile aufgetragen wurde.

Die thermisch aktivierbaren Formteile bestanden aus Celluloid, welches durch einen Ausstanzvorgang in eine definierte Form gebracht wurde. Die Formgebung der thermisch aktivierbaren Formteile erfolgte vor der Applikation auf die Bauteile und die Abmessungen der thermisch aktivierbaren Formteile wurden auf den Klebstoff und die Klebverbindung abgestimmt.

Nach der Fixierung der thermisch aktivierbaren Formteile wurde in einem weiteren Schritt der 2-Komponenten-Epoxidharzklebstoff auf eines der beiden Fügeteile aufgetragen. Die thermisch aktivierbaren Formteile befanden sich nach dem Fügen im Bereich der Klebung und waren komplett vom 2K-EP umgeben.

Zum Trennen der Bauteile wurde der Klebung im Bereich der thermisch aktivierbaren Formteile Wärme zugeführt, bis eine Temperatur erreicht war, bei welcher es zu einer Zersetzung der thermisch aktivierbaren Formteile kam. Die Zersetzung der thermisch aktivierbaren Formteile bewirkte eine Freisetzung/Bildung von gasförmigen Komponenten und eine hieraus resultierende Schwächung der Klebeverbindung.

### Beispiel 4: Verklebung eines metallischen Bauteils mit einem Kunststoffbauteil unter Verwendung eines, als doppelseitiges Klebeband ausgestalteten, thermisch aktivierbaren Expansionselements (erfindungsgemäß)

Ein metallisches Bauteil (eine Unterkonstruktion) und ein Kunststoffbauteil (eine Verblendung), wurden mit Hilfe eines, als doppelseitiges Klebeband ausgestalteten, thermisch aktivierbaren Expansionselements miteinander verbunden.

Nach der Vorbereitung der Oberflächen für das Kleben wurde das als doppelseitiges Klebeband ausgestaltete thermisch aktivierbare Expansionselement zunächst auf eines der beiden Bauteile aufgebracht und anschließend die Bauteile durch starkes aufeinanderpressen miteinander gefügt.

Zum Lösen der Klebverbindung wurde dem Klebeband Wärme zugeführt, was zu einer Expansion der expandierbaren Bereiche des Klebebands und zur Lösung der Klebung führte.

### Beispiel 5:

Es wurde jeweils die Zugscherfestigkeit von miteinander verklebten Standard-Prüfkörper in Anlehnung an DIN EN 1465:2009-07 bestimmt, wobei die Klebschicht der verklebten Standard-Prüfkörper wahlweise ein darin homogen verteiltes Treibmittel oder ein erfindungsgemäßes thermisch aktivierbares Expansionselement enthielt. Der verwendete Klebstoff war jeweils ein 2-Komponenten-Epoxid-Klebstoff (2K-EP).

Für die Bestimmung der Zugscherfestigkeit wurden alle Proben bei Raumtemperatur (RT) zerstörend geprüft. Die Klebfläche betrug bei allen Proben 12,5 × 25 mm. Die Klebschichtdicke betrug bei allen Proben ca. 0,6 mm.

Das Ziel der Untersuchungen war es zu überprüfen, welchen Einfluss die direkte Zumischung von Treibmittel (TM) in den Klebstoff und die Einbringung eines thermisch aktivierbaren Expansionselements (welches das gleiche Treibmittel umfasst) in die Klebschicht auf die Zugscherfestigkeit der Klebeverbindung haben. Als Treibmittel wurde in allen Versuchen ein chemisches Treibmittel auf Azodicarbonamid-Basis verwendet. Die Zieltemperatur für das Zersetzen/Auslösen von Treibmittel und thermisch aktivierbarem Expansionselement war jeweils 220°C.

Die für die Versuche verwendeten thermisch aktivierbaren Expansionselemente wurden hergestellt, indem 35 Gew.-% Treibmittel in eine 2-Komponenten-Polyurethan-Vergussmasse eingearbeitet wurden. Nach dem Mischen des Treibmittels und der 2-Komponenten-Polyurethan-Vergussmasse wurde diese Mischung flachgepresst und bei Raumtemperatur (RT) ausgehärtet. Aus der so erhaltenen flachen Platte (Dicke 0,6 mm) wurden die für die Versuche verwendeten thermisch aktivierbaren Expansionselemente anschließend ausgeschnitten (Breite × Länge der verwendeten thermisch aktivierbaren Expansionselemente: 5x10mm).

Mit den Abmessungen von 5×10mm machen die verwendeten thermisch aktivierbaren Expansionselemente ca. 16% der Gesamtklebfläche von ca. 312,5 mm² aus. Hochgerechnet auf die Gesamtklebung ergibt sich bei 35 Gew.-% an Treibmittel im verwendeten thermisch aktivierbaren Expansionselement ein Treibmittelgehalt von ca. 5,6 Gew.-%, bezogen auf die (das verwendete thermisch aktivierbaren Expansionselement enthaltende) Gesamtklebschicht.

Im Rahmen der Untersuchungen gemäß Beispiel 5 wurde jeweils die Zugscherfestigkeit von miteinander verklebten Standard-Prüfkörpern wie hergestellt und nach einer Erwärmung auf 220 °C bestimmt, wobei die Klebschicht der getesteten miteinander verklebten Standard-Prüfkörper (i) kein Treibmittel, (ii) 20 Gew.-% an homogen in die Klebschicht eingemischtem Treibmittel, oder (iii) ein thermisch aktivierbares Expansionselement (wie vorstehend spezifiziert) enthielt.

In nachfolgender Tabelle 1 sind die getesteten Proben und deren Spezifikationen zusammengefasst.

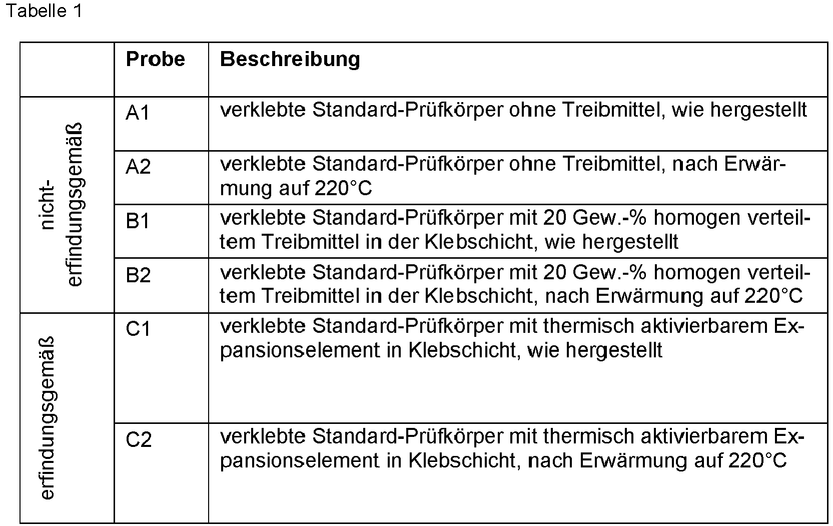

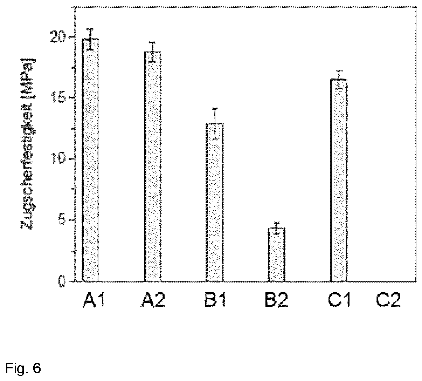

In Fig. 6 sind die gemessenen Zugscherfestigkeiten der Proben A1, A2, B1, B2, C1 und C2 im Vergleich zueinander dargestellt.

Die Ergebnisse zeigen, dass eine kurze Erwärmung der Klebschicht ohne Treibmittel auf 220°C keine signifikante Festigkeitsänderung hervorruft (Probe A1 im Vergleich mit Probe A2).

Der Zusatz von 20 Gew.-% homogen verteiltem Treibmittel in der Klebschicht - ohne dies zu expandieren - hingegen bewirkt bereits, im Vergleich zur Probe ohne Treibmittel, eine Verringerung der Festigkeit auf 12,9 MPa (Probe B1). D.h. der Klebstoff wird durch die Beimengung des Treibmittels in seinen Eigenschaften negativ beeinträchtigt.

Wird der Klebstoff mit den beigemischten 20 Gew.-% Treibmittel kurzzeitig auf 220°C erwärmt, kommt es zu einer leichten Rauchentwicklung und die Klebung wird geschwächt. Es resultiert eine Restfestigkeit von ca. 4,3 MPa (Probe B2).

Durch das Einbringen des thermisch aktivierbaren Expansionselements in die Klebung - ohne dies zu expandieren - wird die Festigkeit, im Vergleich zur Probe ohne Treibmittel, um 3,3 MPa auf 16,5 MPa reduziert (Probe C1). Dies lässt sich dadurch erklären, dass das ca. 50 mm² große Expansionselement einen Teil der ursprünglichen Klebfläche von ca. 312,5 mm² in seiner Festigkeit reduziert. Die Klebfläche geht allerdings nicht vollständig verloren, da das Expansionselement mit einem Hilfsklebstoff auf einem der beiden Fügeteile fixiert wurde und danach mit dem eigentlichen 2K-EP Klebstoff in der Klebung mit dem anderen Fügeteil verklebt wurde.

Nach kurzzeitiger Erwärmung der verklebten Standard-Prüfkörper mit thermisch aktivierbarem Expansionselement auf 220°C (Probe C2) springen die Fügeteile unter kurzer Rauchentwicklung auseinander und die Klebung ist getrennt. Für diese Probe lässt sich also ein vollständiges Versagen/Lösen der Klebeverbindung beobachten.

### Beispiel 6:

Es wurde jeweils die Zugscherfestigkeit von miteinander verklebten Standard-Prüfkörper analog zu vorstehendem Beispiel 5 bestimmt, wobei im Unterschied zu Beispiel 5 als Treibmittel in allen Versuchen ein physikalisches Treibmittel auf Basis vom Mikrokapseln verwendet wurde. Die Zieltemperatur für das Auslösen von Treibmittel und thermisch aktivierbaren Expansionselement war wiederum 220°C.

Die in Beispiel 6 verwendeten thermisch aktivierbaren Expansionselemente wurden hergestellt, indem 33 Gew.-% Treibmittel in eine 2-Komponenten-Polyurethan-Vergussmasse eingearbeitet wurden. Nach dem Mischen des Treibmittels und der 2-Komponenten-Polyurethan-Vergussmasse wurde diese Mischung flachgepresst und bei Raumtemperatur (RT) ausgehärtet. Aus der so erhaltenen flachen Platte (Dicke 0,6 mm) wurden die für die Versuche verwendeten thermisch aktivierbaren Expansionselemente anschließend ausgeschnitten (Breite × Länge der verwendeten thermisch aktivierbaren Expansionselemente: 5x10mm). Mit den Abmessungen von 5x10mm machen die verwendeten thermisch aktivierbaren Expansionselemente ca. 16% der Gesamtklebfläche von ca. 312,5 mm² aus. Hochgerechnet auf die Gesamtklebung ergibt sich bei 33 Gew.-% an Treibmittel im verwendeten thermisch aktivierbaren Expansionselement ein Treibmittelgehalt von ca. 5,3 Gew.-%, bezogen auf die (das verwendete thermisch aktivierbaren Expansionselement enthaltende) Gesamtklebschicht.

Im Rahmen der Untersuchungen gemäß Beispiel 6 wurde jeweils die Zugscherfestigkeit von miteinander verklebten Standard-Prüfkörpern wie hergestellt und nach einer Erwärmung auf 220 °C bestimmt, wobei die Klebschicht der getesteten miteinander verklebten Standard-Prüfkörpern (i) kein Treibmittel, (ii) 20 Gew.-% an homogen in die Klebschicht eingemischtem Treibmittel, oder (iii) ein thermisch aktivierbares Expansionselement (wie vorstehend spezifiziert) enthielt.

In nachfolgender Tabelle 2 sind die getesteten Proben und deren Spezifikationen zusammengefasst.

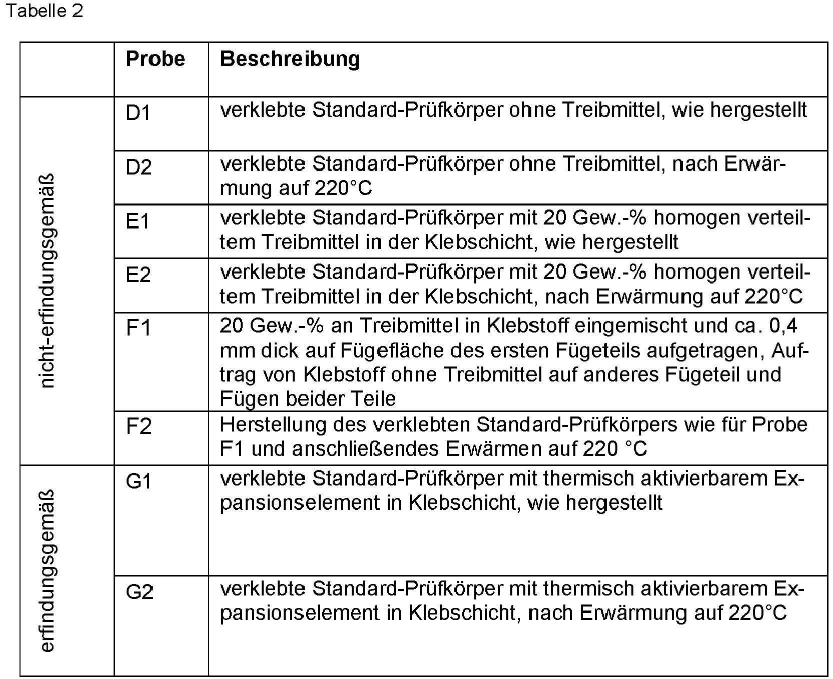

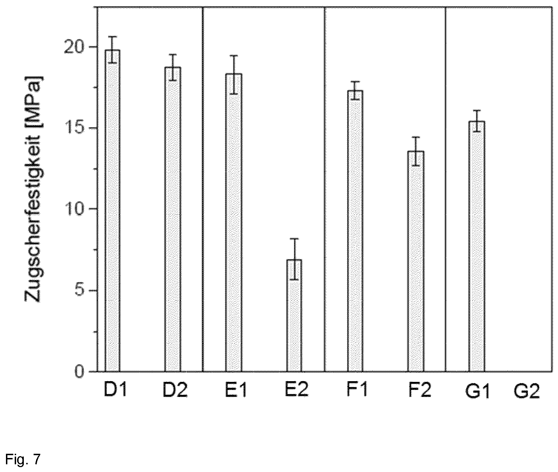

In Fig. 7 sind die gemessenen Zugscherfestigkeiten der Proben D1, D2, E1, E2, F1, F2, G1 und G2 im Vergleich zueinander dargestellt.

Die Ergebnisse zeigen, dass eine kurze Erwärmung der Klebschicht ohne Treibmittel auf 220°C keine signifikante Festigkeitsänderung hervorruft (Probe D1 im Vergleich mit Probe D2).

Der Zusatz von 20 Gew.-% homogen verteiltem physikalischen Treibmittel - ohne dies zu expandieren - bewirkt, im Vergleich zur Probe ohne Treibmittel, eine leichte Verringerung der Festigkeit auf 18,3 MPa (Probe E1).

Wird der Klebstoff mit den beigemischten 20 Gew.-% physikalischem Treibmittel kurzzeitig auf 220°C erwärmt, kommt es zu einer leichten Rauchentwicklung und die Klebung wird geschwächt. Es resultiert eine Restfestigkeit von ca. 6,9 MPa (Probe E2).

Wird der mit 20 Gew.-% physikalischem Treibmittel versetzte Klebstoff als dünne Schicht von 0,4 mm auf eines der Fügeteile aufgebracht, diese Schicht ausgehärtet und dann der gleiche Klebstoff ohne Treibmittel auf das andere Fügeteil aufgetragen um beide Fügeteile zu verkleben, so ergibt sich als Anfangswert eine, im Vergleich zur Probe ohne Treibmittel, leicht verminderte Festigkeit von 17,3 MPa (Probe F1). Durch kurzzeitige Erwärmung auf 220°C wird die Festigkeit auf ca. 13,6 MPa reduziert (Probe F2).

Durch das Einbringen des thermisch aktivierbaren Expansionselements in die Klebung - ohne dieses zu expandieren - wird die Festigkeit, im Vergleich zur Probe ohne Treibmittel, um 4,4 MPa auf 15,4 MPa reduziert (Probe G1). Dies lässt sich dadurch erklären, dass das ca. 50 mm² große Expansionselement einen Teil der ursprünglichen Klebfläche von ca. 312,5 mm² in seiner Festigkeit reduziert.

Nach kurzzeitiger Erwärmung der verklebten Standard-Prüfkörper mit thermisch aktivierbarem Expansionselement auf 220°C (Probe G2) springen die Fügeteile unter kurzer Rauchentwicklung auseinander und die Klebung ist getrennt. Für diese Probe lässt sich also ein vollständiges Versagen/Lösen der Klebeverbindung beobachten.

### Bezugszeichenliste:

- 1: Thermisch aktivierbares Expansionselement
- 2: (erstes) Fügeteil
- 3: (zweites) Fügeteil
- 4: Klebstoff
- 11: Treibmitteleinheiten
- 12: Matrix

## Patentansprüche

1. Thermisch aktivierbares Expansionselement zur Schwächung oder Lösung von Klebeverbindungen, umfassend
eine Vielzahl von Treibmitteleinheiten, umfassend oder bestehend aus ein oder mehreren physikalischen und/oder chemischen Treibmitteln,
umgeben von einer Matrix, umfassend oder bestehend aus ein oder mehreren Substanzen ausgewählt aus der Gruppe bestehend aus Polymeren, Oligomeren, und monomeren Vorläuferverbindungen hiervon.

2. Thermisch aktivierbares Expansionselement nach Anspruch 1, wobei das thermisch aktivierbare Expansionselement
nicht kugelförmig ist
und/oder
eine Dicke von mindestens 0,1 mm aufweist, vorzugsweise von mindestens einem Millimeter,
und/oder
ein Aspektverhältnis Dicke zu Breite von mindestens 1:10 aufweist,
und/oder
eine Breite von mindestens einem Millimeter aufweist,
und/oder
eine Länge von mindestens 10 Millimetern aufweist,
und/oder wobei mindestens eine Seitenfläche des thermisch aktivierbaren Expansionselements eine Fläche von mindestens 0,2 mm² aufweist.

3. Thermisch aktivierbares Expansionselement nach einem der vorangehenden Ansprüche, wobei
die ein oder mehreren Substanzen für die Matrix der Expansionselemente ausgewählt sind aus der Gruppe bestehend aus Thermoplasten, Elastomeren, Duromeren und deren jeweiligen monomeren Vorläuferverbindungen, wobei die ein oder mehreren Substanzen für die Matrix der Expansionselemente vorzugsweise ausgewählt sind aus der Gruppe bestehend aus Polyamiden, Ethylen-Vinylacetat-Copolymeren, Polyvinylacetaten, Polyurethanen, Polyestern, Polysterolen, Plastisolen, Polyethylen, Polypropylen, Polytetrafluorethylen, Polyvinylalkoholen, Epoxiden, Acrylaten, Cyanacrylaten und deren jeweiligen monomeren Vorläuferverbindungen
und/oder
die ein oder mehrere Treibmittel, vorzugsweise die ein oder mehreren physikalischen Treibmittel, Mikrosphären sind
und/oder
die ein oder mehreren chemischen Treibmittel ausgewählt sind aus der Gruppe bestehend aus Azodicarbonamid, p,p'-Oxybisbenzolsulfonylhydrazid, p-Toluolsulfonylhydrazid, Natriumhydrogencarbonat/Zitronensäure-Gemische und Blähgraphit.

4. Verwendung von ein oder mehreren
thermisch aktivierbaren Expansionselementen, wie in einem der vorangehenden Ansprüche 1 bis 3 definiert,
und/oder
thermisch aktivierbaren Formteilen umfassend oder bestehend aus ein oder mehreren chemischen Treibmitteln, wobei die ein oder mehreren thermisch aktivierbaren Formteile entlang mindestens einer Ausdehnungsrichtung eine Ausdehnung von mindestens 1 mm, vorzugsweise von mindestens 10 mm, aufweisen,
in einer Klebeverbindung von miteinander verklebten Fügeteilen zur Schwächung oder zum Lösen der Klebeverbindung,
wobei vorzugsweise das eine oder die mehreren thermisch aktivierbaren Expansionselemente und/oder Formteile jeweils mit mindestens einem der miteinander verklebten Fügeteile in Kontakt stehen.

5. Verwendung nach Anspruch 4, wobei
die ein oder mehreren thermisch aktivierbaren Expansionselementen und/oder Formteile zusätzlich als Distanzstück zwischen den miteinander verklebten Fügeteilen dienen
und/oder
die ein oder mehreren thermisch aktivierbaren Formteile eine Dicke von mindestens 0,1 mm, vorzugsweise von mindestens einem Millimeter, eine Breite von mindestens einem Millimeter, und eine Länge von mindestens 10 Millimetern aufweisen
und/oder
die ein oder mehreren thermisch aktivierbaren Formteile aus einem Kunststoff, vorzugsweise aus Celluloid oder Nitrocellulose, bestehen.

6. Fügeteil mit
ein oder mehreren thermisch aktivierbaren Expansionselementen, wie in einem der vorangehenden Ansprüche 1 bis 3 definiert,
und/oder
ein oder mehreren thermisch aktivierbaren Formteilen, wie in einem der vorangehenden Ansprüche 4 und 5 definiert,
auf der Oberfläche des Fügeteils.

7. Verbundbauteil, umfassend
mindestens zwei durch einen Klebstoff miteinander verbundene Fügeteile
und
ein oder mehrere, zwischen den miteinander verbundenen Fügeteilen angeordnete,
thermisch aktivierbare Expansionselemente, wie in einem der vorangehenden Ansprüche 1 bis 3 definiert,
und/oder
thermisch aktivierbare Formteile, wie in einem der vorangehenden Ansprüche 4 und 5 definiert,
wobei die ein oder mehreren thermisch aktivierbaren Expansionselemente und/oder Formteile jeweils mit mindestens einem der durch den Klebstoff miteinander verbundenen Fügeteile in Kontakt stehen.

8. Verbundteil nach Anspruch 7, wobei
sich die Matrix stofflich vom Klebstoff unterscheidet
und/oder
die ein oder mehreren thermisch aktivierbaren Expansionselemente und/oder Formteile jeweils mit beiden durch den Klebstoff miteinander verbundenen Fügeteilen in Kontakt stehen
und/oder
die Gesamtfläche der zwischen den miteinander verbundenen Fügeteilen angeordneten thermisch aktivierbaren Expansionselemente und/oder Formteile weniger als 100% der überlappenden Fläche beider miteinander verbundenen Fügeteile ausmacht, vorzugsweise weniger als 50%, besonders vorzugsweise weniger als 20%, ganz besonders vorzugsweise weniger als 5%.

9. Verbundteil nach Anspruch 7 oder 8, zusätzlich umfassend ein oder mehrere, zwischen den miteinander verbundenen Fügeteilen angeordnete, Suszeptoren für induktive Erwärmung und/oder Mikrowellenerwärmung,
wobei die ein oder mehreren Suszeptoren vorzugsweise in direkter Nachbarschaft zu oder in den ein oder mehreren thermisch aktivierbaren Expansionselementen und/oder Formteilen angeordnet sind.

10. Verbundteil nach einem der Ansprüche 7 bis 9, wobei die ein oder mehreren thermisch aktivierbaren Expansionselemente und/oder Formteile so angeordnet sind, dass bei ungleichmäßiger Aktivierung der Expansionselemente und/oder Formteile eine zusätzliche mechanische Krafteinwirkung, vorzugsweise eine schälende Krafteinwirkung, auf die Klebeverbindung ausgeübt wird.

11. Verfahren zur Herstellung eines Verbundbauteils, wie in einem der vorangehenden Ansprüche 7 bis 10 definiert, wobei das Verfahren folgende Schritte umfasst:
I) Herstellen oder Bereitstellen eines ersten und eines zweiten Fügeteils;
II.a) Applizieren von ein oder mehreren thermisch aktivierbaren Expansionselementen, wie in einem der vorangehenden Ansprüche 1 bis 3 definiert, und/oder Applizieren von ein oder mehreren thermisch aktivierbaren Formteilen, wie in einem der vorangehenden Ansprüche 4 und 5 definiert, sowie Applizieren eines Klebstoffes auf dem ersten und/oder dem zweiten Fügeteil;
oder
II.b) Applizieren eines Klebstoffes auf dem ersten und/oder dem zweiten Fügeteil, wobei dem Klebstoff während des Applizierens ein oder mehrmals pulsweise ein Treibmittel, wie in einem der vorangehenden Ansprüchen 1 und 3 definiert, zudosiert wird, sodass die applizierte Klebstoffschicht ein oder mehrere lokal begrenzte Stellen mit einer Vielzahl von Treibmitteleinheiten aufweist;
III) Verkleben des ersten und des zweiten Fügeteils.

12. Verfahren nach Anspruch 11, wobei die ein oder mehreren thermisch aktivierbaren Expansionselemente in Schritt II) in flüssiger oder fester Form appliziert werden.

13. Verfahren zur Schwächung und/oder zur Lösung der Klebeverbindung eines Verbundbauteils, wie in einem der vorangehenden Ansprüche 7 bis 10 definiert, wobei das Verfahren folgende Schritte umfasst:
- Bereitstellen eines Verbundbauteils, wie in einem der vorangehenden Ansprüche 7 bis 10 definiert;
- Erwärmen der ein oder mehreren thermisch aktivierbaren Expansionselemente und/oder Formteile des Verbundbauteils, sodass die Auslösetemperatur der thermisch aktivierbaren Expansionselemente und/oder Formteile erreicht wird und eine Expansion der ein oder mehreren thermisch aktivierbaren Expansionselemente und/oder Formteile stattfindet.

14. Verfahren nach Anspruch 13, wobei das Erwärmen der ein oder mehreren thermisch aktivierbaren Expansionselemente und/oder Formteile
unter Verwendung von Wärmeleitung, Konvektion, Widerstandserwärmung, Wärmestrahlung, Induktion oder Mikrowellenstrahlung erfolgt
und/oder
zeitversetzt und/oder ungleichmäßig erfolgt, so dass eine zusätzliche mechanische Krafteinwirkung auf die Klebeverbindung ausgeübt wird.
